# FASCICULE DE BREVET EUROPEEN

(11) **EP 2 588 923 B1**
(45) Date de publication et mention de la délivrance du brevet: **06.03.2019**
(21) Numéro de dépôt: 11736427.3
(22) Date de dépôt: 23.06.2011
(51) Int. Cl.: G05B 13/02, G05B 15/02, G06N 99/00, H04L 12/28

(54) **ADAPTATION DU FONCTIONNEMENT D'UN APPAREIL**
ADAPTION EINES GERÄTEBETRIEBS
ADAPTATION OF THE OPERATION OF AN APPARATUS

(30) Priorité: 29.06.2010 FR 1055210
(43) Date de publication de la demande: 08.05.2013
(73) Titulaire: Orange, 75015 Paris (FR)
(72) Inventeur: BENAZZOUZ, Yazid, 38100 Grenoble (FR); RAMPARANY, Fano, F-38100 Grenoble (FR); GADEYNE, Jérémie, F-59670 Sainte Marie Cappel (FR); BEAUNE, Philippe, F-42530 Saint Genest Lerpt (FR)
(74) Mandataire: Cabinet Plasseraud
(86) Numéro de dépôt international: PCT/FR2011/051440
(87) Numéro de publication internationale: WO 2012/001271

(56) Documents cités:
- EP-A1- 0 883 050
- EP-A2- 1 967 922
- WO-A1-2010/037950
- US-B1- 6 263 260
- RASHIDI P ET AL: "Keeping the Resident in the Loop: Adapting the Smart Home to the User", IEEE TRANSACTIONS ON SYSTEMS, MAN AND CYBERNETICS. PART A:SYSTEMS AND HUMANS, IEEE SERVICE CENTER, PISCATAWAY, NJ, US, vol. 39, no. 5, 1 septembre 2009 (2009-09-01), pages 949-959, XP011271621, ISSN: 1083-4427, DOI: DOI:10.1109/TSMCA.2009.2025137
- KWANG-HYUN PARK ET AL: "A Steward Robot for Human-Friendly Human-Machine Interaction in a Smart House Environment", IEEE TRANSACTIONS ON AUTOMATION SCIENCE AND ENGINEERING, IEEE SERVICE CENTER, NEW YORK, NY, US, vol. 5, no. 1, 1 janvier 2008 (2008-01-01) , pages 21-25, XP011197543, ISSN: 1545-5955, DOI: DOI:10.1109/TASE.2007.911674

## Description

La présente invention concerne une adaptation du fonctionnement d'un appareil connecté à un réseau déployé dans un environnement, en particulier dans une situation inhabituelle.

L'invention s'applique avantageusement, mais non limitativement, au domaine des services de télécommunications, et plus particulièrement des services de la domotique, immotique et ville intelligente.

Il existe actuellement sur le marché un système domotique proposant un apprentissage des habitudes d'un utilisateur d'appareils électriques pour automatiser l'allumage ou l'extinction d'appareils électriques dans un habitat par exemple. L'utilisateur d'un tel système a la possibilité d'agir sur les paramètres de configuration et de contrôle des appareils localement ou à travers internet en utilisant une interface logicielle. En prenant en compte ces données, le système domotique apprend les actions qui conviennent à partir des entrées utilisateur de sorte à automatiser de telles actions relatives notamment à l'envoi de messages d'alerte à l'utilisateur. A titre d'exemple, le système apprend que dans certaines situations prédéfinies par l'utilisateur, et détectées par des capteurs déployés dans l'habitat, il convient d'envoyer une alerte par exemple par un courriel ou par un message SMS.

Cependant, ce système ne permet pas de déterminer, sans aucune intervention de l'utilisateur, les situations auxquelles il faut réagir en adaptant le fonctionnement d'un ou de plusieurs appareils. Dans le système domotique existant, l'association entre les situations et les services fournis par les appareils déployés dans l'habitat est assurée grâce à des règles prédéfinies qui peuvent être adaptées par l'utilisateur à travers une interface logicielle et en mettant en oeuvre un apprentissage sur la base des modifications apportées par l'utilisateur. Le document RASHIDI et al "Keeping the Resident in the Loop: Adapting teh smrt hme to the user".IEEE TRANSACTIONS ON SYSTEMS, MAN AND CYBERNETICS 1 September 2009, pages 949-959 décrit un procédé d'adaptation du fonctionnement d'un appareil.

La présente invention vient améliorer la situation.

A cet effet, la présente invention vise tout d'abord un procédé d'adaptation du fonctionnement d'un appareil connecté à un réseau déployé dans un environnement.

Ce procédé comprend les étapes, mises en oeuvre par un élément central, de :
- collecte de données relatives à l'environnement provenant d'une pluralité de sources ;
- identification de situations habituelles de l'environnement à partir d'une analyse des données collectées ;
- détection d'une dérive par rapport à au moins une situation habituelle identifiée ; et
- envoi d'une commande à l'appareil pour adapter son fonctionnement à la dérive détectée.

Ainsi, l'invention permet une adaptation du fonctionnement d'un appareil selon l'historique de son utilisation à partir d'une analyse de données relatives à l'environnement provenant de différentes sources sans aucune intervention de l'utilisateur. Le procédé de l'invention permet, suite à la détection d'une dérive par rapport à une situation habituelle de l'environnement, d'envoyer automatiquement une commande à l'appareil pour adapter son fonctionnement.

Ainsi, la présente invention permet de résoudre le problème lié à l'adaptation du fonctionnement d'appareils déployés dans un environnement, par exemple un bâtiment ou un habitat, aux situations de cet environnement de manière automatique sans intervention de l'utilisateur.

Dans une réalisation, les sources comprennent des capteurs déployés dans l'environnement et/ou des services web locaux et/ou distants et/ou des applications locales et/ou distantes. Toutes les données pouvant être pertinentes pour évaluer les situations de l'environnement sont ainsi prises en compte quelle que soit leur source.

Avantageusement, les données collectées sont représentées selon un modèle unique. La représentation des données des différentes sources selon un seul modèle de données permet ainsi de traiter de manière générique les données issues de différentes sources. A titre d'exemple, ce modèle est fondé sur un langage de web sémantique.

Dans une forme de réalisation, l'étape d'identification de situations habituelles de l'environnement utilise une technique de regroupement de données (« data clustering »). Cette technique présente l'avantage de pouvoir analyser les données collectées de manière non supervisée. Par exemple, cette technique utilise un algorithme appelé en anglais « k-means », ou un algorithme EM (« Expectation Maximisation ») ou un algorithme hiérarchique ou un algorithme MCK (« Markov Cluster Algorithm »).

Selon cette technique de regroupement, une situation habituelle est représentée par la situation dite «centriste», c'est-à-dire la situation centroïde de chaque groupe (« cluster »). Cette situation est ainsi considérée comme la situation représentative du groupe.

Avantageusement, le procédé précité comprend une étape de mise en correspondance des situations habituelles identifiées avec l'appareil précité. Cette mise en correspondance permet de déterminer les appareils de l'environnement, et les services associés à ces appareils, concernés par chaque situation habituelle identifiée.

Dans une réalisation, l'étape de détection d'une dérive comprend une sous-étape de comparaison des données collectées à des données des situations habituelles par rapport à au moins un seuil. Ceci permet de comparer en temps réel la situation actuelle de l'environnement avec les situations habituelles identifiées, la situation actuelle comprenant l'ensemble des données collectées des différentes sources au moment de la comparaison.

L'utilisation d'un tel seuil permet de disposer d'une marge distinguant les vraies dérives et les faibles écarts par rapport à des situations habituelles.

Dans une réalisation, le procédé d'adaptation comprend en outre :
- une étape de réception de données de modification de la commande d'adaptation par un utilisateur ; et
- une étape de correction des situations habituelles identifiées suite à la réception des données de modification.

Ainsi, une éventuelle réaction de l'utilisateur est bien prise en compte par le procédé d'adaptation.

Avantageusement, le procédé d'adaptation comprend en outre une étape préalable d'auto-configuration de l'élément central et des sources. Ainsi, aucune configuration de la part de l'utilisateur n'est nécessaire pour le fonctionnement du procédé.

A titre d'exemple, lors d'une nouvelle installation dans un environnement particulier tel un habitat, l'élément central et les sources s'auto-configurent de sorte à s'adapter automatiquement à cet environnement particulier. De la même manière, suite à un changement d'une des sources par une nouvelle source, aucune intervention de l'utilisateur n'est nécessaire pour que le procédé d'adaptation selon l'invention fonctionne correctement.

Toutes les variantes du procédé décrites ci-dessus peuvent être présentes isolément ou selon toutes les combinaisons techniquement possibles.

L'invention propose également un système d'adaptation du fonctionnement d'un appareil connecté à un réseau déployé dans un environnement, ledit système comprenant un élément central et une pluralité de sources. L'élément central est alors adapté pour mettre en oeuvre les étapes du procédé d'adaptation précité.

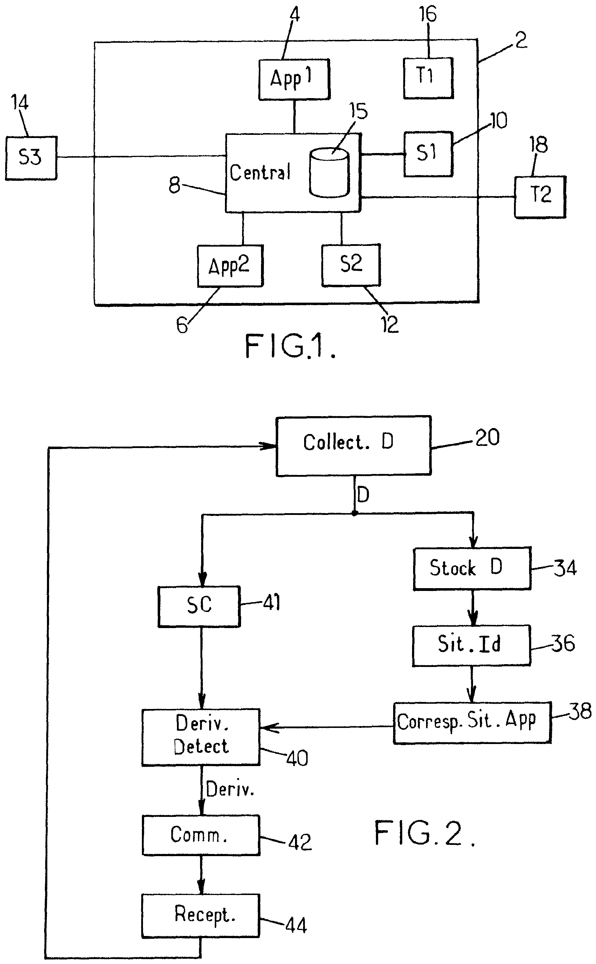

La présente invention vise aussi un programme d'ordinateur comportant des instructions pour la mise en oeuvre du procédé d'adaptation précité, lorsque ce programme est exécuté par un processeur. A titre d'exemple, la figure 2 commentée ci-après peut correspondre à un organigramme représentant l'algorithme général d'un tel programme.

D'autres caractéristiques et avantages de l'invention apparaîtront à l'examen de la description détaillée ci-après, et des dessins annexés sur lesquels :
- la figure 1 est un schéma synoptique illustrant la structure d'un système d'adaptation selon l'invention ;
- la figure 2 est un organigramme illustrant le fonctionnement d'un procédé d'adaptation selon l'invention ;

- la figure 3 est un schéma synoptique illustrant une représentation graphique d'un modèle de données selon une variante de réalisation de l'invention ; et
- la figure 4 est un schéma synoptique illustrant une représentation graphique d'une ontologie d'un environnement en exemple.

La figure 1 illustre un environnement 2 tel un habitat ou un bâtiment. Cet environnement 2 constitue par exemple un lieu de vie ou de travail d'un utilisateur qui utilise régulièrement, voire quotidiennement, des appareils 4, 6, de type ampoules, portes et/ou volets à ouverture automatique, appareils de cuisson, radiateurs, etc.

Selon l'invention, un appareil peut avoir différentes utilisations. A titre d'exemple, une ampoule peut être allumée, éteinte ou bien son intensité peut être augmentée ou diminuée.

Les appareils 4, 6 sont connectés en réseau à l'aide d'un système comprenant un élément central 8 et des sources 10, 12, 14 connectées à l'élément central 8 à travers le réseau. Par exemple, les sources 10, 12, 14 sont connectées à l'élément central 8 à travers des liaisons de transmission d'information de type filaire comme, par exemple, une liaison coaxiale ou une liaison optique, ou de type sans fil comme, par exemple, une liaison Wifi, Bluetooth , Zigbee, etc.

L'élément central 8 est, à titre d'exemple, un boîtier domotique HAB (« Home Automation Box »). Il est associé à un module de stockage 15 de données.

Les sources 10, 12, 14 comportent par exemple des capteurs déployés dans l'environnement 2 et/ou des services web locaux et/ou distants et/ou des applications locales et/ou distantes.

Des exemples de capteurs sont par exemple les capteurs de présence infrarouge, les capteurs de température, etc.

Un service web distant est par exemple une base de données médicale distante susceptible d'envoyer des données de santé concernant l'utilisateur, un service web de météo, etc.

Une application distante est par exemple un répondeur de bureau indiquant la présence de l'utilisateur sur son lieu de travail, une application de vidéoconférence, une application de gestion de courrier, etc.

En outre, l'utilisateur dispose de terminaux 16, 18 lui permettant de communiquer avec l'élément central 8, à travers un réseau sans fil, par exemple un réseau 3G ou un réseau Wifi, ou bien un réseau IP, par exemple internet. De tels terminaux 16, 18 comprennent, à titre d'exemples, un téléphone portable et/ou un ordinateur et/ou une tablette Wifi.

L'organigramme de la figure 2 illustre le fonctionnement du procédé d'adaptation d'un appareil quelconque parmi les appareils 4, 6 utilisés dans l'environnement 2.

A l'étape 20 de la figure 2, l'élément central 8 collecte des données relatives à l'environnement à partir des différentes sources 10, 12, 14.

Avantageusement, les données collectées sont transférées régulièrement vers une base de données distante. Ceci permet d'éviter la perte des données collectées, par exemple lorsque les données stockées localement sont détruites ou perdues. De plus, ce choix permet de ne pas nécessiter un grand espace de stockage au niveau de l'élément central. La base de données distante choisie est située, par exemple, au niveau de l'opérateur pour permettre certains types de traitements sur les données collectées.

Les données acquises sont représentées selon un seul modèle de données. Selon un mode de réalisation, ce modèle est fondé sur un langage de web sémantique, par exemple le langage RDF (« Resource Description Framework ») ou encore le langage OWL (« Web Ontology Language »).

Le langage RDF est décrit notamment dans : Graham Klyne, Jeremy J. Carroll : « Resource Description Framework (RDF), Concepts and Abstract Syntax », W3C Recommendation, 10 février 2004.

Le langage OWL est décrit notamment dans : Michael K. Smith, Chris Welty, Deborah L. McGuinness, « OWL Web Ontology Language Guide », W3C Recommendation, 10 février 2004.

Ce type de modèle fondé sur un langage de web sémantique permet d'avoir un même format des données provenant de sources différentes et hétérogènes. Il permet en outre d'attribuer une signification détaillée à des données brutes. A titre d'exemple, une donnée brute de valeur égale à 15 indique la température de la cuisine à 10 heures. Cette valeur est donnée par un capteur de température tl avec une confiance de 90%.

Ce type de modèle permet également d'avoir les mêmes significations des concepts utilisés dans l'environnement. A titre d'exemple, po5 et po6 désignent des portes. Ce type de modèle permet ainsi de représenter les données de manière standardisée et permet en outre de créer des liens entres ces données afin de faciliter leur regroupement.

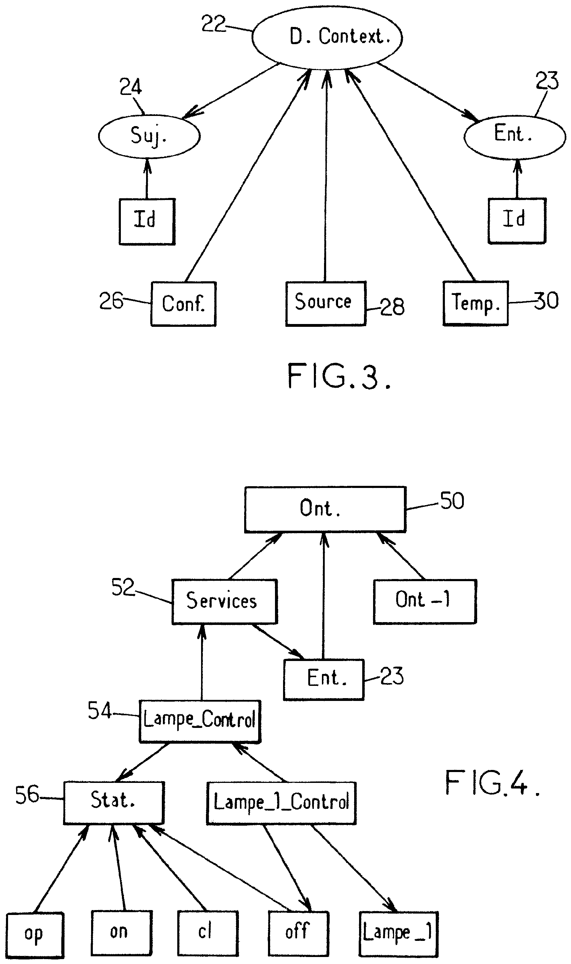

A titre d'exemple, la figure 3 est une représentation graphique d'un modèle de données fondé sur le langage RDF du consortium Web W3C.

Selon ce langage, des données acquises à partir d'une source 10, 12, 14 quelconque comprennent :
- un noeud racine qui représente une donnée de contexte 22 (« context data ») ; il s'agit d'un identificateur de la donnée ;
- une entité 23 (« entity »). C'est l'entité concernée par la donnée. Cette entité est par exemple une personne, un objet ou un concept. L'entité 23 est identifiée par un identifiant (« identifier »). Par exemple, une entité personne ayant comme identifiant "John", un objet "ampoule" ayant pour identifiant "Ampl", un concept "son" ayant pour identifiant "son-tv" ;
- un sujet 24 (« subject ») qui définit le sujet concernant l'entité 23. Le sujet 24 a un identifiant (« identifier »). A titre d'exemples de sujets 24, on peut citer la « localisation » ayant pour identifiant « cuisine » et concernant l'entité « personne », ou encore le sujet « état » ayant pour identifiant « allumée » et concernant l'entité « ampoule », ou encore le sujet « niveau » ayant pour identifiant « 5 » et concernant l'entité « son » ;
- un indice de confiance 26 (« confidence ») attribué à la donnée. Par exemple, La source qui envoie la donnée attribue une valeur de confiance à cette donnée sur la base de caractéristiques internes ou de caractéristiques définies par le constructeur de la source. Par exemple, un capteur infrarouge détecte une présence à 90% ;
- une source 28 qui est la source 10, 12, ou 14 à partir de laquelle les données ont été collectées, par exemple un capteur infrarouge lorsque le sujet 24 est la présence d'une personne ; et
- une estampille temporelle 30 (« timestamp ») qui indique l'instant auquel les données ont été émises.

Lors de la collecte des données à l'étape 20 de la figure 2, les sources 10, 12, 14 communiquent avec le module de stockage 15 à travers une interface logicielle selon un mode d'abonnement (« subscription »). Selon ce mode, seuls les changements sont stockés à l'étape 34 dans le module de stockage 15. L'ancienne valeur de chaque donnée reste ainsi valide tant qu'il n' y pas de nouvelle valeur de la donnée.

Selon un mode de réalisation de l'invention, les données collectées sont stockées dans une base de données de type MySql (« My Structured Query Language » décrite dans l'ouvrage de Michael Kofler en 2005 : « MySQL 5 : Guide de l'administrateur et du développeur », ISBN 2212116330) du module de stockage 15.

A l'étape 36 de la figure 2, l'élément central 8 identifie, à l'aide d'une analyse des données collectées, des situations habituelles de l'environnement 2.

Une situation habituelle peut concerner l'utilisateur ou son environnement 2. On distingue ainsi des situations habituelles d'utilisation d'un appareil 4, 6 et des situations habituelles de vie de l'utilisateur.

On désigne par situation habituelle de l'environnement une conjonction d'utilisations d'appareils électriques de cet environnement et de valeurs d'informations de contexte relatives à ce même environnement, telles que la présence de l'utilisateur dans l'environnement, l'heure du jour etc.

Un exemple d'une situation habituelle d'utilisation est le fait que l'utilisateur remonte chaque matin les volets et qu'il les descend chaque soir ou le fait qu'il ferme la porte à clés avant son départ au travail le matin, ou le fait qu'il ne laisse jamais son téléphone mobile à la maison quand il sort de chez lui ou le fait qu'il met le volume de la télévision toujours à un niveau 5 quand il regarde une chaîne musicale de télévision ou encore le fait que l'utilisateur diminue toujours le son de la télévision quand il reçoit un appel téléphonique etc.

Un exemple d'une situation habituelle de vie est le fait que la consommation d'énergie des appareils dans l'environnement 2 est toujours comprise entre 5 et 10 kW quand l'utilisateur est au travail ou le fait que la fumée est détectée dans l'environnement 2 uniquement pendant les périodes de repas.

Selon un mode de réalisation de l'invention, l'analyse de données utilisée pour identifier des situations habituelles est fondée sur une technique de regroupement de données (« data clustering ») par exemple en utilisant l'algorithme appelé en anglais « k-means » ou en utilisant une variante de l'algorithme de regroupement de Markov MCK (« Markov Cluster Algorithm ») qui permet de déterminer des régions naturelles (« clusters ») dans des graphes.

La technique de regroupement de données par « k-means » est décrite dans l'ouvrage de Hartigan, J. A. (1975) : « Clustering Algorithms », Wiley, MR0405726, ISBN 0-471-35645-X.

L'algorithme MCK est décrit dans : B. Samuel Lattimore, Stijn van Dongen et M. James C. Crabbe « GeneMCL in microarray analysis », Journal of Computational Biology and Chemistry », volume 29, numéro 5, pages 354-359, année 2005.

Les données provenant de différentes sources à un instant t constituent une situation. Le changement d'au moins une valeur de ces données est considéré comme un changement de situation. Les situations au cours du temps sont comparées et regroupées en utilisant par exemple la variante de l'algorithme de regroupement MCK. Cet algorithme emploie des mesures de similarités de type tf-idf (« term frequency-inverse document frequency »), des mesures de similarités de type relationnelles permettant de comparer les données sur la base des relations existant entre les concepts d'un graphe et des mesures conceptuelles permettant de comparer des concepts sur la base de leur rapprochement au niveau d'un système de représentation des connaissances relatives à une situation, ou ontologie. Chaque groupe (« cluster ») obtenu par l'algorithme correspond alors à une situation habituelle. En d'autres termes, la situation centroïde de chaque groupe obtenu représente une situation habituelle.

A titre d'exemple, lorsque l'environnement 2 est un habitat, l'étape 36 d'identification de situations habituelles peut s'effectuer le soir pendant le sommeil de l'utilisateur.

A l'étape 38 de la figure 2, une mise en correspondance des situations habituelles identifiées avec une ou plusieurs utilisations d'un ou plusieurs appareils est effectuée.

Cette mise en correspondance permet de déterminer les appareils de l'environnement, et les services associés à ces appareils, concernés par chaque situation habituelle identifiée. A titre d'exemple, pour la situation habituelle: " l'utilisateur ne laisse jamais son téléphone mobile à la maison quand il sort de chez lui ", l'appareil concerné est le téléphone mobile et le service concerné est le service d'alerte. Ainsi, l'utilisateur en fermant la porte, une alarme sur la porte se déclenche indiquant un oubli en utilisant une couleur particulière soutenue par un affichage avec l'objet oublié.

Selon un mode de réalisation, lorsque l'algorithme de regroupement a été utilisé pour l'identification à l'étape 36, si une telle situation habituelle représentative du groupe correspond à une ou plusieurs utilisations d'un ou plusieurs appareil(s) dans l'environnement 2 alors la situation habituelle et les utilisations de l'appareil ou des appareils correspondant(s) sont sauvegardés pour une utilisation ultérieure.

La mise en correspondance à l'étape 38 est effectuée en analysant les données constituant chaque situation habituelle identifiée. Chacune de ces données est mise en correspondance avec une description des services relatifs aux appareils et des effets des services ou des utilisations des appareils dans une ontologie de l'environnement 2 en posant une requête à cette ontologie.

Cette ontologie sert ainsi au calcul des similarités conceptuelles et relationnelles et à la mise en correspondance des appareils et services avec les situations habituelles de l'environnement.

La figure 4 représente la mise en correspondance entre une donnée décrivant une lampe éteinte Lampe_1 supposée faisant partie d'une situation habituelle et une utilisation particulière de la lampe Lampe_1.

Sur la figure 4, l'ontologie 50 décrit les données provenant de différentes entités 23 et les services 52 fournis dans l'environnement. Parmi ces services, le service « contrôle de lampe » 54 agit sur l'état 56 de la lampe.

La donnée « Lampe 1 éteinte » est représentée selon le modèle de la figure 3. Selon ce modèle, les deux valeurs de l'entité soit Lampe_1 et du contexte « éteinte » (« off ») de la donnée sont analysées afin de vérifier si la situation habituelle correspond à une utilisation d'un appareil comme le montre la requête exprimée selon le langage de requête Sparql (décrit dans : Eric Prud'hommeaux, Andy Seaborne « SPARQL Query Language for RDF », W3C Recommendation 15 janvier2008) :

```
 PREFIX base: <http://www.owlontologies.com/ContextDataOntology.owl#>
 SELECT ?service
 WHERE { ?service base:hasEffect base:off.
 ?service base:hasActionOn base:Lampe_1}
```

La réponse à cette requête est le service de contrôle de l'appareil Lampe_1 : lampe_1_control.

A l'étape 40, l'élément central 8 détecte en temps réel s'il y une dérive d'une situation actuelle SC 41 de l'environnement, correspondant aux données actuelles collectées depuis les sources 10, 12, 14 par rapport à au moins une situation habituelle SP identifiée à l'étape 36.

A cet effet, l'élément central 8 compare en temps réel les données collectées aux données des situations habituelles identifiées en termes d'au moins un seuil.

Selon un mode de réalisation, les seuils portent sur les valeurs d'estampille temporelle 30 et/ou d'indice de confiance 26 et/ou des valeurs que peut prendre un sujet 24.

A titre d'exemple de dérive, dans la situation actuelle, les données collectées montrent qu'une lampe est allumée alors que dans la situation habituelle, cette lampe est éteinte. Le seuil pour comparer les deux données correspondant aux deux situations actuelle et habituelle est par exemple deux minutes au niveau de l'estampille temporelle.

Un exemple de pseudo algorithme pour la détection d'une dérive est le suivant:
*Pour chaque donnée appartenant à la situation actuelle (SC) et*
*Pour chaque donnée appartenant à la situation habituelle (SP)*
*Si les données de contexte de SP et SC proviennent de la même source S faire*
   *Comparer SP et SC au terme des seuils (Sei)*
   *Si ressemblance marquer la donnée en SP et celle en SC*
   *Aller à la situation SP suivante;*
   *Aller à la situation SC suivante.*
*Si au moins deux données ne se ressemblent pas alors il est considéré qu'il n'y a pas de dérive.*
*Si une seule divergence (une seule non ressemblance pour deux données provenant d'une même source) est trouvée alors vérifier si elle correspond au même appareil.*
*Si c'est le cas alors c'est une dérive.*
*Fin.*

A l'étape 42, l'élément central 8 envoie une commande à l'appareil concerné pour que celui-ci adapte son fonctionnement à la dérive détectée. Plus particulièrement, la commande est envoyée en utilisant un format disponible dans les protocoles radio déployés dans l'environnement, par exemple, ZigBee, Wifi, Bluetooth, etc., ou en utilisant un langage de commande de haut niveau, par exemple, WSDL/SOAP (« Web Services Description Language/Simple Object Access Protocol »).

Selon un mode de réalisation, relatif à un simple actionnement de l'appareil, de type « On/Off », une commande de format simple est utilisée par exemple selon le protocole ZigBee.

Dans le cas d'une commande plus évoluée, une description du langage WSDL/SOAP est utilisée, à titre d'exemple, pour contrôler un disque NAS (« Network Attached Storage ») et manipuler son contenu multimédia.

Selon un autre mode de réalisation de l'invention, un message d'alerte est envoyé à l'utilisateur à l'aide d'un message SMS en utilisant un réseau 3G ou bien à l'aide d'un courrier électronique en utilisant un réseau de type internet.

Un exemple d'utilisation du procédé de l'invention est le suivant. L'environnement est un habitat et une situation habituelle de cet environnement est le fait que, pendant les jours de travail de la semaine, l'utilisateur éteint tous les appareils avant son départ au travail. La consommation énergétique de l'environnement est alors de 50 Wh. Exceptionnellement, un jour, l'utilisateur est en retard. Il sort précipitamment sans éteindre différents appareils de l'habitat, par exemple la plaque chauffante de la cuisinière et l'ampoule de la chambre à coucher et il laisse la porte du réfrigérateur ouverte. Des capteurs de présence et des capteurs sur les portes déployés dans l'habitat indiquent cette dérive par rapport à la situation habituelle.

Le système selon l'invention détecte également une forte consommation d'énergie par rapport à la normale. Il identifie les appareils responsables de cette forte consommation notamment la plaque chauffante de la cuisinière et l'ampoule de la chambre à coucher et adapte le fonctionnement de ces appareils en coupant le courant à ces appareils.

Concernant la porte du réfrigérateur, le système selon l'invention émet une alerte qu'il envoie par un message SMS en utilisant le réseau 3G ou par un courrier électronique en utilisant le réseau internet.

Selon un mode de réalisation de l'invention, le procédé d'adaptation comprend une étape 44 de réception de données de modification de la commande par l'utilisateur.

Une telle modification peut consister en une annulation de la commande de l'appareil par l'utilisateur. Dans le cas où la commande était une alerte envoyée à l'utilisateur, la modification est par exemple le fait que l'utilisateur ignore cette alerte car il juge que la dérive n'est pas importante.

Dans ce cas, l'élément central relance le procédé d'identification de situations habituelles afin de prendre en compte la réaction de l'utilisateur.

A titre d'exemple, l'utilisateur met le volume de la télévision toujours à un niveau 5 quand il regarde, dans son salon, une chaîne de télévision particulière, de musique par exemple. Lorsqu'une dérive est détectée, par exemple le volume est à un niveau 2 dans les mêmes conditions (même chaîne particulière, utilisateur dans son salon), le volume de la télévision est corrigé au niveau 5. Si l'utilisateur corrige cette adaptation en remettant le son au niveau 2 sachant qu'il est en train de lire un document, le système se corrige en considérant dans cet exemple, que l'utilisateur ne met pas le son de la télé au niveau 5 quand il est en train de lire un document. Ainsi, le système a pris en compte cette nouvelle donnée à savoir la lecture d'un document en regardant la chaîne de musique dans l'étape d'identification des situations habituelles.

Selon un mode de réalisation, pour détecter une modification de l'utilisateur, l'élément central 8 définit un intervalle de temps tc, qui correspond au temps minimum donné à l'utilisateur pour réagir à la commande. Il compare ensuite en temps réel les situations de l'environnement pendant l'intervalle défini tc avec la situation pertinente en utilisant par exemple une version équivalente du pseudo algorithme de détection d'une dérive présenté ci-dessus.

Si l'utilisateur ne réagit pas pendant ce temps, l'action du système d'adaptation est considérée comme correcte.

Le procédé d'adaptation selon l'invention est avantageusement mis en oeuvre à l'aide d'un programme d'ordinateur exécuté par un processeur de l'élément central du système d'adaptation.

Le système d'adaptation de l'invention comprenant l'élément central 8 et les sources 10, 12, 14 est auto-configurable dans n'importe quel environnement sans intervention de l'utilisateur grâce au fait que les données sont représentées selon un même format pouvant être interprété quelques soient les sources utilisées rendant de ce fait le système complètement ouvert.

En outre, il est possible d'administrer ce système d'adaptation à distance, par exemple à partir d'une page web.

Un exemple d'application concrète de l'invention dans l'aide aux économies d'énergie est le suivant. Si le système d'adaptation identifie des situations habituelles de forte consommation d'énergie dans un habitat, et qu'une situation particulière correspondant à une consommation importante qui n'a pas été identifiée auparavant est détectée, l'élément central envoie une commande à l'appareil de surveillance de la consommation énergétique pour alerter l'utilisateur par un message SMS par exemple en spécifiant les dispositifs responsables de cette surconsommation.

En outre, l'invention s'applique avantageusement aux domaines de l'aide au maintien à domicile des personnes âgées ou dépendantes et du confort en environnement résidentiel ou professionnel.

## Revendications

1. Procédé d'adaptation du fonctionnement d'un appareil (4,6) connecté à un réseau déployé dans un environnement (2), **caractérisé en ce qu'**il comprend les étapes, mises en oeuvre par un élément central (8), de :
- collecte (20) de données relatives à l'environnement (2) provenant d'une pluralité de sources (10,12,14) ;
- identification (36) de situations habituelles de l'environnement (2) à partir d'une analyse des données collectées ;
- détection (40) d'une dérive par rapport à au moins une situation habituelle identifiée ; et
- envoi (42) d'une commande à l'appareil (4,6) pour adapter son fonctionnement à la dérive détectée.

2. Procédé d'adaptation selon la revendication 1, **caractérisé en ce que** les sources (10,12,14) comprennent des capteurs déployés dans l'environnement et/ou des services web locaux et/ou distants et/ou des applications locales et/ou distantes.

3. Procédé d'adaptation selon la revendication 1 ou 2, **caractérisé en ce que** les données collectées sont représentées selon un modèle unique.

4. Procédé d'adaptation selon la revendication 1, **caractérisé en ce que** l'étape d'identification (36) de situations habituelles de l'environnement utilise une technique de regroupement de données.

5. Procédé d'adaptation selon la revendication 1, **caractérisé en ce qu'**il comprend une étape de mise en correspondance (38) des situations habituelles identifiées avec l'appareil (4,6).

6. Procédé d'adaptation selon la revendication 1, **caractérisé en ce que** l'étape de détection (40) d'une dérive comprend une sous-étape de comparaison des données collectées à des données des situations habituelles par rapport à au moins un seuil.

7. Procédé d'adaptation selon la revendication 1, **caractérisé en ce qu'**il comprend en outre :
- une étape de réception (44) de données de modification de la commande d'adaptation par un utilisateur ; et
- une étape de correction des situations habituelles identifiées suite à la réception des données de modification.

8. Procédé d'adaptation selon la revendication 1, **caractérisé en ce qu'**il comprend en outre une étape préalable d'auto-configuration de l'élément central (8) et des sources (10,12,14).

9. Système d'adaptation du fonctionnement d'un appareil connecté à un réseau déployé dans un environnement, ledit système comprenant un élément central (8) et une pluralité de sources (10,12,14), **caractérisé en ce que** l'élément central (8) est adapté pour mettre en oeuvre les étapes du procédé d'adaptation selon l'une quelconque des revendications 1 à 8.

10. Programme d'ordinateur comportant des instructions pour la mise en oeuvre du procédé selon l'une des revendications 1 à 8, lorsque ce programme est exécuté par un processeur.

## Patentansprüche

1. Verfahren zur Adaption des Betriebs eines Gerätes (4, 6), das mit einem in einer Umgebung implementierten Netzwerk (2) verbunden ist, **dadurch gekennzeichnet, dass** es die folgenden, von einem zentralen Element (8) ausgeführten Schritte umfasst:
- Erfassen (20) von Daten über die Umgebung (2), die von einer Vielzahl von Quellen (10, 12, 14) kommen;
- Ermitteln (36) von üblichen Situationen der Umgebung (2) anhand einer Analyse der erfassten Daten;
- Erkennen (40) einer Abweichung von mindestens einer ermittelten üblichen Situation und
- Senden (42) eines Befehls an das Gerät (4, 6), um seinen Betrieb an die erkannte Abweichung zu adaptieren.

2. Adaptionsverfahren nach Anspruch 1, **dadurch gekennzeichnet, dass** die Quellen (10, 12, 14) Sensoren, die in der Umgebung implementiert sind, und/oder lokale und/oder remote Web-Dienste und/oder lokale und/oder remote Anwendungen umfassen.

3. Adaptionsverfahren nach Anspruch 1 oder 2, **dadurch gekennzeichnet, dass** die erfassten Daten nach einem einzigen Modell dargestellt werden.

4. Adaptionsverfahren nach Anspruch 1, **dadurch gekennzeichnet**, das der Schritt des Ermittelns (36) von üblichen Situationen der Umgebung eine Technik des Clusterings von Daten umfasst.

5. Adaptionsverfahren nach Anspruch 1, **dadurch gekennzeichnet, dass** es einen Schritt des Abgleichens (38) der ermittelten üblichen Situationen mit dem Gerät (4, 6) umfasst.

6. Adaptionsverfahren nach Anspruch 1, **dadurch gekennzeichnet, dass** der Schritt des Erkennens (40) einer Abweichung einen Teilschritt des Vergleichens der erfassten Daten mit den Daten der üblichen Situationen in Bezug auf mindestens einen Schwellenwert umfasst.

7. Verfahren nach Anspruch 1, **dadurch gekennzeichnet, dass** es ferner umfasst:
- einen Schritt des Empfangens (44) von Daten zum Ändern des Adaptionsbefehls durch einen Nutzer und
- einen Schritt des Korrigierens der ermittelten üblichen Situationen nach dem Empfangen der Änderungsdaten.

8. Adaptionsverfahren nach Anspruch 1, **dadurch gekennzeichnet, dass** es ferner einen vorherigen Schritt der Selbstkonfiguration des zentralen Elements (8) und der Quellen (10, 12, 14) umfasst.

9. System zur Adaption des Betriebs eines Geräts, das mit einem in einer Umgebung implementierten Netzwerk verbunden ist, wobei das System ein zentrales Element (8) und eine Vielzahl von Quellen (10, 12, 14) umfasst, **dadurch gekennzeichnet, dass** das zentrale Element (8) geeignet ist, die Schritte des Adaptionsverfahrens nach einem der Ansprüche 1 bis 8 auszuführen.

10. Computerprogramm mit Anweisungen zum Ausführen des Verfahrens nach einem der Ansprüche 1 bis 8, wenn dieses Programm von einem Prozessor ausgeführt wird.

## Claims

1. Method for adapting the manner of operation of an apparatus (4,6) connected to a network deployed in an environment (2), **characterized in that** it comprises the steps, implemented by a central element (8), of:
- collecting (20) data relating to the environment (2) originating from a plurality of sources (10,12,14);
- identifying (36) customary situations of the environment (2) on the basis of an analysis of the data collected;
- detecting (40) a drift with respect to at least one customary situation identified; and
- dispatching (42) a command to the apparatus (4, 6) to adapt its manner of operation to the drift detected.

2. Adaptation method according to Claim 1, **characterized in that** the sources (10,12,14) comprise sensors deployed in the environment and/or local and/or remote Web services and/or local and/or remote applications.

3. Adaptation method according to Claim 1 or 2, **characterized in that** the data collected are represented according to a unique model.

4. Adaptation method according to Claim 1, **characterized in that** the step (36) of identifying customary situations of the environment uses a data grouping technique.

5. Adaptation method according to Claim 1, **characterized in that** it comprises a step (38) of matching the identified customary situations with the apparatus (4,6).

6. Adaptation method according to Claim 1, **characterized in that** the step (40) of detecting a drift comprises a sub-step of comparing the data collected with data of the customary situations with respect to at least one threshold.

7. Adaptation method according to Claim 1, **characterized in that** it furthermore comprises:
- a step (44) of receiving modification data for modifying the adaptation command by a user; and
- a step of correcting the customary situations identified subsequent to the receiving of the modification data.

8. Adaptation method according to Claim 1, **characterized in that** it furthermore comprises a prior step of auto-configuration of the central element (8) and of the sources (10,12,14).

9. System for adapting the manner of operation of an apparatus connected to a network deployed in an environment, said system comprising a central element (8) and a plurality of sources (10,12,14), **characterized in that** the central element (8) is adapted to implement the steps of the adaptation method according to any one of Claims 1 to 8.

10. Computer program comprising instructions for the implementation of the method according to one of Claims 1 to 8, when this program is executed by a processor.
